Europäisches Patentamt

European Patent Office

Office européen des brevets

(19)

(11) **EP 1 000 472 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.⁷: **H04B 7/26**

(21) Anmeldenummer: **98947312.9**

(22) Anmeldetag: **20.07.1998**

(86) Internationale Anmeldenummer:
**PCT/DE98/02029**

(87) Internationale Veröffentlichungsnummer:
**WO 99/007085 (11.02.1999 Gazette 1999/06)**

(54) **VERFAHREN UND FUNKSTATION ZUR DATENÜBERTRAGUNG**

METHOD AND RADIO STATION FOR TRANSMITTING DATA

PROCEDE ET STATION RADIO POUR LA TRANSMISSION DE DONNEES

(84) Benannte Vertragsstaaten:
**DE ES FR GB IT**

(30) Priorität: **01.08.1997 DE 19733336**

(43) Veröffentlichungstag der Anmeldung:
**17.05.2000 Patentblatt 2000/20**

(73) Patentinhaber: **SIEMENS AKTIENGESELLSCHAFT**
**80333 München (DE)**

(72) Erfinder:
 • **BAHRENBURG, Stefan**
  **D-81477 München (DE)**
 • **EUSCHER, Christoph**
  **D-46414 Rhede (DE)**
 • **WEBER, Tobias**
  **D-67731 Otterbach (DE)**
 • **BAIER, Paul, Walter**
  **D-67661 Kaiserslautern (DE)**
 • **MAYER, Jürgen**
  **D-67105 Schifferstadt (DE)**
 • **SCHLEE, Johannes**
  **89134 Blaustein (DE)**

(56) Entgegenhaltungen:
 **EP-A- 0 615 352          WO-A-99/07084**

 • **JUNG P ET AL: "A JOINT DETECTION CDMA MOBILE RADIO SYSTEM CONCEPT DEVELOPED WITHIN COST 231" PROCEEDINGS OF THE VEHICULAR TECHNOLOGY CONFERENCE, CHICAGO, JULY 25 - 28, 1995, Bd. 1, Nr. CONF. 45, 25. Juli 1995, Seiten 469-473, XP000550217 INSTITUTE OF ELECTRICAL AND ELECTRONICS ENGINEERS**

**Beschreibung**

Die Erfindung betrifft ein Verfahren und eine Funkstation zur Datenübertragung über eine Funkschnittstelle in einem Funk-Kommunikationssystem, insbesondere in einem Mobilfunknetz.

In Funk-Kommunikationssystemen werden Nachrichten (beispielsweise Sprache, Bildinformation oder andere Daten) mit Hilfe von elektromagnetischen Wellen übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Die abgestrahlten elektromagnetischen Wellen werden aufgrund von Verlusten durch Reflektion, Beugung und Abstrahlung infolge der Erdkrümmung und dergleichen gedämpft. Infolgedessen sinkt die Empfangsleistung, die bei der empfangenden Funkstation zur Verfügung steht. Diese Dämpfung ist ortsabhängig und bei sich bewegenden Funkstationen auch zeitabhängig.

Zwischen einer sendenden und einer empfangenden Funkstation besteht eine Funkschnittstelle, über die mit Hilfe der elektromagnetischen Wellen eine Datenübertragung stattfindet. Aus DE 195 49 148 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Eine solche Funkschnittstelle ist auch aus Jung, et al, "A joint detection CDMA mobile radio system concept developed within COST 231", IEEE, Proceedings of the vehicular technology conference, Chicago, 25-28.Juli 1995, Bd.1, S.469-473. Empfangsseitig wird ein JD-Verfahren (Joint Detection) angewendet, um unter Kenntnis von Spreizcodes mehrerer Teilnehmer eine verbesserte Detektion der übertragenen Daten vorzunehmen. Dabei ist es bekannt, daß einer Verbindung über die Funkschnittstelle zumindest zwei Datenkanäle zugeteilt werden können, wobei jeder Datenkanal durch einen individuellen Spreizcode unterscheidbar ist.

Es ist aus dem GSM-Mobilfunknetz bekannt, daß übertragene Daten als Funkblöcke (Burst) innerhalb von Zeitschlitzen übertragen werden, wobei innerhalb eines Funkblockes Mittambeln mit bekannten Symbolen übertragen werden. Diese Mittambeln können im Sinne von Trainingssequenzen zum empfangsseitigen Abstimmen der Funkstation genutzt werden. Die empfangende Funkstation führt anhand der Mittambeln eine Schätzung der Kanalimpulsantworten für verschiedene Übertragungskanäle durch. Die Länge der Mittambel ist unabhängig von den Verkehrsbedingungen fest definiert. Aus EP 0 615 352 A1 ist eine variabel einstellbare Länge von Mittambeln in einem TDMA-System bekannt, um die Kanalschätzung zu verbessern.

Für solche Funk-Kommunikationssysteme stellt die Anzahl der gemeinsam schätzbaren Kanalimpulsantworten einen kapazitätsbegrenzenden Faktor dar. Da die Anzahl der Symbole der Mittambel endlich ist und eine Kanalimpulsantwort nicht unendlich kurz sein kann, ist die Zahl der gemeinsam schätzbaren Kanalimpulsantworten begrenzt und somit auch die Anzahl der gemeinsam über die Funkschnittstelle übertragenen Datenkanäle.

Der Erfindung liegt folglich die Aufgabe zugrunde, ein Verfahren und eine Funkstation zur Datenübertragung über eine Funkschnittstelle anzugeben, die die funktechnischen Ressourcen der Funkschnittstelle besser ausnutzen. Die internationale Patentanmeldung WO 99/07084 des gleichen Anmelders, die unter Artikel 54(3) EPÜ fällt, offenbart ein Verfahren und eine Funkstation welche/s die gleiche Aufgabe löst. Dazu wird eine Mittambel als gemeinsame Mittambel zur Kanalschätzung für mehrere Datenkanäle einer Verbindung übertragen, wobei das Verhältnis der Länge von Mittambel und Datenteil den Geländebedingungen angepasst werden kann. Gemäß der vorliegenden Erfindung wird diese Aufgabe durch das Verfahren mit den Merkmalen des Patentanspruchs 1 und die Funkstation mit den Merkmalen des Patentanspruchs 6 gelöst. Vorteilhafte Weiterbildungen der Erfindung sind den Unteransprüchen zu entnehmen.

Erfindungsgemäß ist beim Verfahren zur Datenübertragung in einem Funk-Kommunikationssystem eine Funkschnittstelle in Zeitschlitze zur Übertragung von Funkblöcken untergliedert. Dabei werden in einem Zeitschlitz die Daten in Datenkanälen übertragen, wobei die Datenkanäle durch einen individuellen Spreizkode unterscheidbar sind. Ein endlicher Funkblock bestehend aus Datensymbolen und zumindest einer Mittambel mit bekannten Symbolen dient der Datenübertragung in einem Datenkanal. In einem Zeitschlitz wird eine Mittambel als gemeinsame Mittambel zur Kanalschätzung für mehrere Datenkanäle einer Verbindung übertragen. Es wird das Verhältnis der Länge von Mittambel und einem Datenteil mit Datensymbolen entsprechend der Verkehrsbedingungen eingestellt.

Damit kann durch eine Verlängerung der Mittambel die Begrenzung der schätzbaren Kanalimpulsantworten und damit der in einem Zeitschlitz übertragbaren Verbindungen aufgehoben werden. Wird die Mittambel verlängert, so kann eine größere Anzahl von Verbindungen übertragen werden. Andererseits kann bei nur wenigen Verbindungen pro Zeitschlitz die Mittambellänge verkürzt werden, so daß ein größerer Anteil des Zeitschlitzes für die Übertragung der Datensymbole genutzt werden kann. Die Einstellbarkeit der Mittambellänge gilt auch für Funkblöcke innerhalb von Datenkanälen eines Verbindungstyps (Nutzinformationen, Signalisierungsinformationen, Organisationsinformationen, Zugriffsfunkblöcke).

Erfindungsgemäß ist ein Parameter für die Verkehrsbedingungen:

- die Anzahl der Verbindungen im Zeitschlitz, und/oder

- die Übertragungsqualität im Zeitschlitz.

Die Anzahl der Verbindungen pro Zeitschlitz, die momentane Anzahl und/oder die gewünschte Anzahl, berücksichtigt die Anzahl schätzbarer Kanalimpulsantworten.

Die Übertragungsqualität, beispielsweise die Bitfehlerrate o.ä., kann als Parameter zur Einschätzung der Qualität der Kanalschätzung benutzt werden. Ist die bisherige Länge der geschätzen Kanalimpulsantwort nicht ausreichend, so führt dies zu einer verschlechterten Datendetektion. Durch entsprechende Veränderung des Verhältnisses der Längen von Mittambel und Datenteil kann dem entgegengewirkt werden.

Wird die Mittambellänge dynamisch der Anzahl der Verbindungen im Zeitschlitz und an die Länge der zu schätzenden Kanalimpulsantwort angepaßt, so erhöht sich im Mittel die spektrale Effizienz der Funkschnittstelle.

Nach einer weiteren vorteilhaften Ausprägung der Erfindung wird die Einstellung des Verhältnisses der Länge von Mittambel und dem Datenteil mit Datensymbolen zeitabhängig durchgeführt. Dies bedeutet, daß ausgehend von den aktuellen und/oder gewünschten Verkehrsbedingungen der Funkschnittstelle eine Anpassung der Mittambellänge stattfindet. Damit wird die Struktur des Funkblocks den Verkehrsbedingungen ohne große Verzögerung angepaßt. Diese Steuerung kann durch eine Basisstation oder durch andere Netzkomponenten durchgeführt werden.

Die Einstellung des Verhältnises der Länge von Mittambel und dem Datenteil mit Datensymbolen wird alternativ oder zusätzlich zeitschlitzindividuell durchgeführt. Die Verkehrsbedingungen schwanken von Zeitschlitz zu Zeitschlitz.

Es liegt weiterhin im Rahmen der Erfindung, daß die in einem Zeitschlitz verwendeten Mittambeln von einem gemeinsamen Mittambelgrundcode abgeleitet werden. Damit lassen sich sende- und empfangsseitig die Mittambel besonders leicht erzeugen und eine Kanal Schätzung kann für alle Verbindungen, deren Mittambel von einem gemeinsamen Mittambelgrundcode abgeleitet wurden, gemeinsam durchgeführt werden.

Es liegt ebenso im Rahmen der Erfindung, daß die Datenkanäle mit unterschiedlichen Mittambellängen unterschiedliche Datenraten aufweisen. Die unterschiedlichen Datenraten können daher entstehen, daß der Anteil der Datensymbole pro Zeitschlitz sich verändert. Dann kann beispielsweise durch ein Umschalten auf einen sogenannten Halfrate-Betrieb die Sprachübertragung mit gleichbleibender Qualität fortgesetzt werden.

Ausführungsbeispiele der Erfindung werden anhand der beiliegenden Zeichnungen näher erläutert.

Dabei zeigen

FIG 1    ein Blockschaltbild eines Mobilfunknetzes,

FIG 2    eine schematische Darstellung der Rahmenstruktur der Funkschnittstelle,

FIG 3    eine schematische Darstellung des Aufbaus eines Funkblocks,

FIG 4    eine schematische Darstellung von verschiedenen Funkblöcken,

FIG 5    eine schematische Darstellung für eine Zuteilungsstrategie von Verbindungen zu Zeitschlitzen,

FIG 6    ein Blockschaltbild vom Sender einer Funkstation, und

FIG 7    ein Blockschaltbild vom Empfänger einer Funkstation.

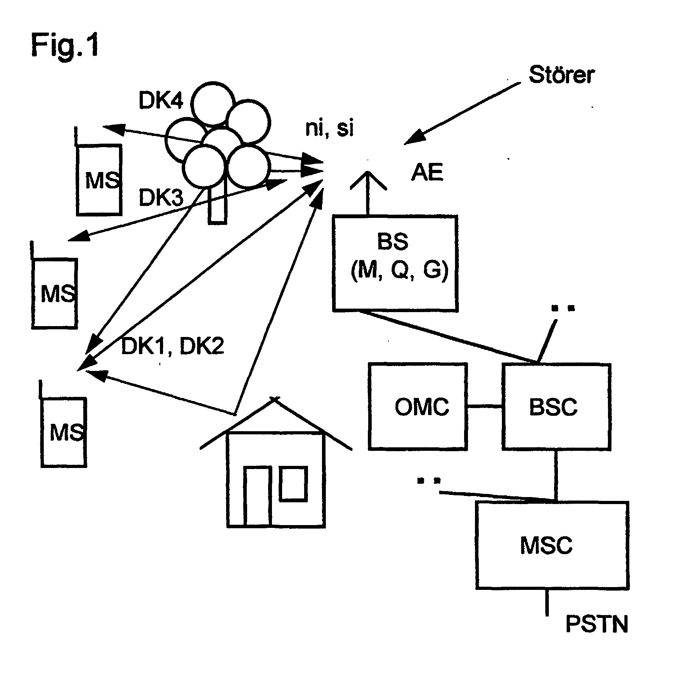

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Funkverbindung zu Mobilstationen MS aufbauen kann.

In FIG 1 sind beispielhaft drei Funkverbindungen zur Übertragung von Nutzinformationen ni und Signalisierungsinformationen si zwischen drei Mobilstationen MS und einer Basisstation BS dargestellt, wobei einer Mobilstation MS zwei Datenkanäle DK1 und DK2 und den anderen Mobilstationen MS jeweils ein Datenkanal DK3 bzw. DK4 zugeteilt sind. Ein Operations- und Wartungszentrum OMC realisiert Kontroll- und Wartungsfunktionen für das Mobilfunknetz bzw. für Teile davon. Die Funktionalität dieser Struktur wird vom Funk-Kommunmikationssystem nach der Erfindung genutzt; sie ist jedoch auch auf andere Funk-Kommunikationssysteme übertragbar, in denen die Erfindung zum Einsatz kommen kann.

Die Basisstation BS ist mit einer Antenneneinrichtung verbunden, die z.B. aus drei Einzelstrahlern besteht. Jeder der Einzelstrahler strahlt gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) eingesetzt werden kann.

Die Basisstation BS stellt den Mobilstationen MS Organisationsinformationen über den Aufenthaltsbereich (LA location area) und über die Funkzelle (Funkzellenkennzeichen) zur Verfügung. Die Organisationsinformationen werden gleichzeitig über alle Einzelstahler der Antenneneinrichtung abgestrahlt.

Die Verbindungen mit den Nutzinformationen ni und Signalisierungsinformationen si zwischen der Basisstation BS und den Mobilstationen MS unterliegen einer Mehrwegeausbreitung, die durch Reflektionen beispielsweise an Gebäuden zusätzlich zum direkten Ausbreitungsweg hervorgerufen werden. Durch eine gerichtete Abstahlung durch bestimmte Einzelstrahler der Antenneneinrichtung AE ergibt sich im Vergleich zur omnidirektionalen Abstahlung ein größerer Antennengewinn. Die Qualität der Verbindungen wird durch die gerichtete Abstrahlung verbessert.

Geht man von einer Bewegung der Mobilstationen MS aus, dann führt die Mehrwegeausbreitung zusammen mit weiteren Störungen dazu, daß bei der empfangenden Mobilstation MS sich die Signalkomponenten der verschiedenen Ausbreitungswege eines Teilnehmersignals zeitabhängig überlagern. Weiterhin wird davon ausgegangen, daß sich die Teilnehmersignale verschiedener Basisstationen BS am Empfangsort zu einem Empfangssignal rx in einem Frequenzkanal überlagern. Aufgabe einer empfangenden Mobilstation MS ist es, in den Teilnehmersignalen übertragene Daten d der Nutzinformationen ni, Signalisierungsinformationen si und Daten der Organisationsinformationen zu detektieren.

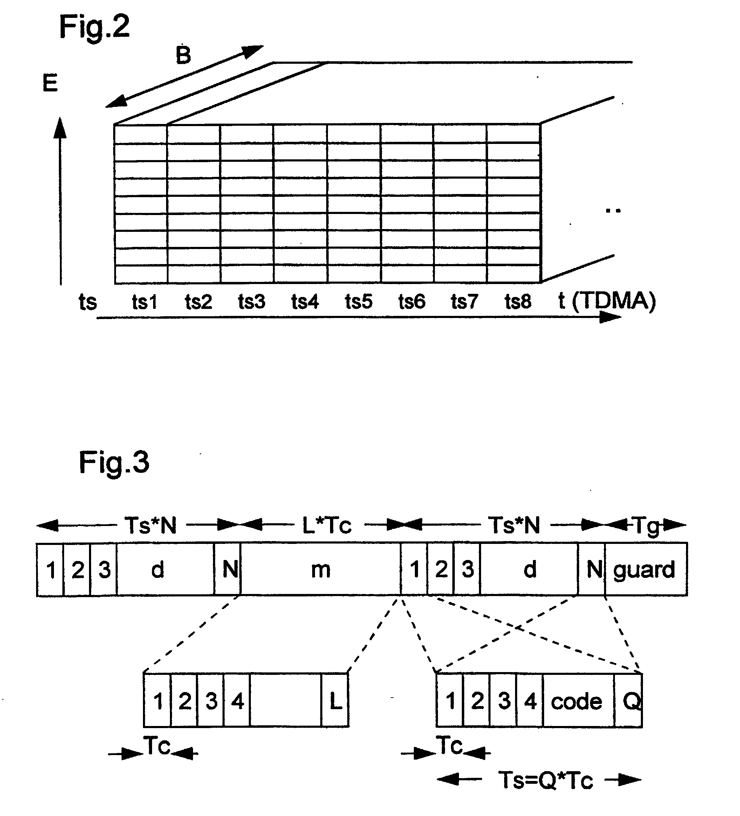

Die Rahmenstruktur der Funkschnittstelle ist aus FIG 2 ersichtlich. Gemäß einer TDMA-Komponente ist eine Aufteilung eines breitbandigen Frequenzbereiches, beispielsweise der Bandbreite B = 1,6 MHz, in mehrere Zeitschlitze ts, beispielsweise 8 Zeitschlitze ts1 bis ts8 vorgesehen. Jeder Zeitschlitz ts innerhalb des Frequenzbereiches B bildet einen Frequenzkanal. Innerhalb der Frequenzkanäle, die zur Nutzdatenübertragung vorgesehen sind, werden Informationen mehrerer Verbindungen in Funkblöcken übertragen. Gemäß einer FDMA (Frequency Division Multiple Access)-Komponente sind dem Funk-Kommunikationssystem mehrere Frequenzbereiche B zugeordnet.

Gemäß FIG 3 bestehen diese Funkblöcke zur Nutzdatenübertragung aus Datenteilen mit Datensymbolen d, in denen Abschnitte mit empfangsseitig bekannten Mittambeln m eingebettet sind. Die Daten d sind verbindungsindividuell mit einer Feinstruktur, einem Speizcode, gespreizt, so daß empfangsseitig beispielsweise K Datenkanäle DK1, DK2, DK3,.. DKK durch diese CDMA-Komponente separierbar sind. Jeden dieser Datenkanäle DK1, DK2, DK3,.. DKK wird sendeseitig pro Symbol eine bestimmte Energie E zugeordnet.

Die Spreizung von einzelnen Symbolen der Daten d mit Q Chips bewirkt, daß innerhalb der Symboldauer Ts Q Subabschnitte der Dauer Tc übertragen werden. Die Q Chips bilden dabei den individuellen Spreizkode. Die Mittambel m besteht aus L Chips, ebenfalls der Dauer Tc. Weiterhin ist innerhalb des Zeitschlitzes ts eine Schutzzeit guard der Dauer Tg zur Kompensation unterschiedlicher Signalaufzeiten der Verbindungen aufeinanderfolgender Zeitschlitze ts vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei ein bestimmter Zeitschlitz des Rahmens einen Frequenzkanal zur Nutzdatenübertragung bildet und wiederkehrend von einer Gruppe von Verbindungen genutzt wird. Weitere Frequenzkanäle, beispielsweise zur Frequenzoder Zeitsynchronisation der Mobilstationen MS werden nicht in jedem Rahmen, jedoch zu einem vorgegebenen Zeitpunkten innerhalb eines Multirahmens eingeführt. Die Abstände zwischen diesen Frequenzkanälen bestimmen die Kapazität, die das Funk-Kommunikationssystem dafür zur Verfügung stellt.

Die Parameter der Funkschnittstelle sind z.B. wie folgt:

| Dauer eines Funkblocks | 577 μs |
|---|---|
| Anzahl Chips pro Mittambel m | 243 |
| Schutzzeit Tg | 32 μs |
| Datensymbole pro Datenteil N | 33 |
| Symboldauer Ts | 6,46 μs |
| Chips pro Symbol Q | 14 |
| Chipdauer Tc | 6 / 13 μs |

In Aufwärts- (MS -> BS) und Abwärtsrichtung (BS -> MS) können die Parameter auch unterschiedlich eingestellt werden.

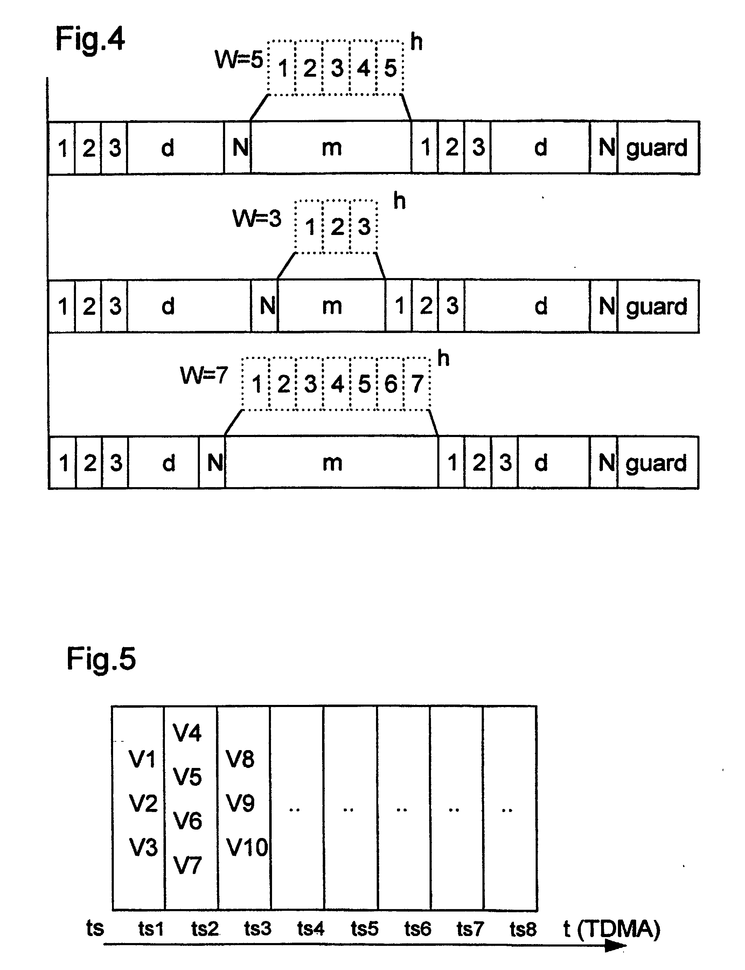

Eine Beeinflussung der Datenrate ist in FIG 4 gezeigt. Hierbei wird nicht von einer konstanten Funkblockstruktur ausgegangen, sondern eine Veränderung der Funkblockstruktur wird durch die Steuereinrichtung SE veranlaßt.

Die Einstellung der Länge der Mittambel m wird entsprechend von bestimmten Verkehrsbedingungen auf der Funkschnittstelle durchgeführt. So werden durch die Steuereinrichtung SE (ggf. nach Vorgaben anderer Netzkomponenten: z.B. dem Basisstationscontroller BSC) Parameter zu den Verkehrsbedingungen bestimmt.

Diese Parameter für die Verkehrsbedingungen:

- die Anzahl M der Verbindungen im Zeitschlitz, und/oder
- die Übertragungsqualität Q im Zeitschlitz.

Diese Parameter können sowohl aktuell gemessene Werte oder zukünftige Werte sein, wobei letztere entstehen würden, falls weitere Verbindungen bzw. Datenkanäle einem Zeitschlitz ts zugewiesen werden.

Die Anzahl M der Verkehrsbedingungen pro Zeitschlitz beeinflußt direkt die Anzahl schätzbarer Kanalimpulsantworten.

Die Übertragungsqualität Q, wird durch die Bitfehlerrate repräsentiert und gibt Aufschluß über die Qualität der Kanalschätzung. Ist die bisherige Länge W der geschätzen Kanalimpulsantwort h nicht ausreichend, so führt dies zu einer verschlechterten Datendetektion. Durch entsprechende Veränderung des Verhältnisses der Längen von Mittambel m und Datenteil kann dem entgegengewirkt werden.

Schwanken die Verkehrsbedingungen in einer Funkzelle stark, so ist die Einstellung zusätzlich zeitschlitz- bzw. zeitabhängig.

Verbindungen mit ähnlichen Verkehrsbedingungen werden einem gemeinsamen Zeitschlitz ts zugeordnet und die optimale Mittambellänge für diesen Zeitschlitz für alle Verbindungen gemeinsam eingestellt. Die Zeitabhängigkeit berücksichtigt eine dynamische Anpassung der Funkblockstruktur, damit wird die Struktur des Funkblocks den Verkehrsbedingungen ohne große Verzögerung angepaßt. Wird die Mittambellänge dynamisch der Anzahl M der Verbindungen im Zeitschlitz und an die Länge W der zu schätzenden Kanalimpulsantwort angepaßt, so erhöht sich im Mittel die spektrale Effizienz der Funkschnittstelle.

FIG 5 zeigt einen Rahmen der TDMA-Struktur der Funkschnittstelle. Die Zuteilung der Verbindungen V1 bis V10 zu einzelnen Zeitschlitzen ts1, ts 2, ts 3 wird netzseitig durchgeführt. Dabei ist zu berücksichtigen, daß pro Zeitschlitz ts nur eine begrenzte Anzahl von Kanalimpulsantworten h gemeinsam schätzbar ist. Diese Limitierung ergibt sich daraus, daß die Kanalimpulsantworten L Chips enthalten, die Kanalimpulsantworten zur genauen Kanalschätzung W Koeffizienten aufweisen und M die Anzahl der Verbindungen pro Zeitschlitz darstellt. Die Anzahl gemeinsam schätzbarer Kanalimpulsarten h ist dabei durch die Ungleichung $L \geq M * W + W - 1$ begrenzt.

Die Zuteilungsstrategie sieht daher vor, daß in jedem Zeitschitz ts in etwa eine gleiche Anzahl von Verbindungen übertragen wird. In zweiter Hinsicht wird die Mittambellänge in jedem Zeitschlitz ts berücksichtigt, so daß beispielsweise im Zeitschlitz ts2, bei dem die Verbindungen V4 bis V7 eine längere Mittambel m haben, eine größere Anzahl von Verbindungen übertragen wird.

Durch die Nutzung einer gemeinsamen Mittambel m für mehrere Datenkanäle DK1 und DK2 ist es möglich in einem Zeitschlitz ts eine größere Anzahl von Datenkanälen DK1 und DK2 zu übertragen. Dies führt zu einer Erhöhung der Datenrate pro Zeitschlitz ts oder zu einer Verlängerung der schätzbaren Kanalimpulsantworten h (für komplizierte Geländestrukturen) in diesem Zeitschlitz ts.

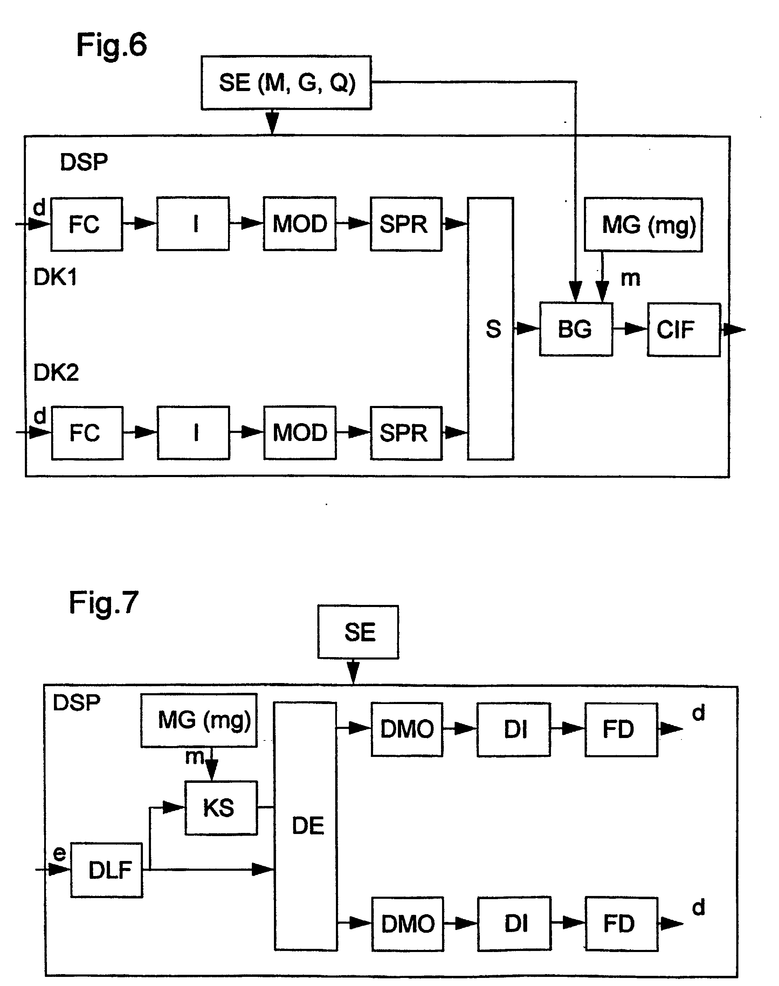

Die Sende- bzw. Empfänger nach FIG 6 bzw. FIG 7 beziehen sich auf Funkstationen, die sowohl eine Basisstation BS oder eine Mobilstation MS sein können. Es wird jedoch nur die Signalverarbeitung für eine Verbindung gezeigt.

Der Sender nach FIG 6 nimmt die zuvor digitalisierten Datensymbole d einer Datenquelle (Mikrofon oder netzseitige Verbindung) auf, wobei die beiden Datenteile mit je N=33 Datensymbolen d getrennt verarbeitet werden. Es findet zuerst eine Kanalcodierung der Rate 1/2 und constraint length 5 im Faltungscodierer FC statt, worauf sich eine Verwürfelung im Interleaver I mit einer Verwürfelungstiefe von 4 oder 16 anschließt.

Die verwürfelten Daten werden anschließend in einem Modulator MOD 4-PSK moduliert, in 4-PSK Symbole umgewandelt und daraufhin in Spreizmitteln SPR entsprechend individueller Spreizcodes gespreizt. Diese Verarbeitung wird in einem Datenverarbeitungsmittel DSP parallel für alle Datenkanäle DK1, DK2 einer Verbindung durchgeführt. Nicht dargestellt ist, daß im Fall einer Basisstation BS die übrigen Verbindungen ebenfalls parallel verarbeitet werden. Das Datenverarbeitungsmittel DSP kann durch einen digitalen Signalprozessor, der durch eine Steuereinrichtung SE gesteuert wird, durchgeführt werden.

In einem Summierglied S werden die gespreizten Daten der Datenkanäle DK1 und DK2 überlagert, wobei bei dieser Überlagerung die Datenkanäle DK1 und DK2 eine gleiche Wichtung erfahren. Die zeitdiskrete Darstellung des Sendesignals s für den m-ten Teilnehmer kann nach folgender Gleichung erfolgen:

$$s^{(m)}_{q+(n-1)Q} = \sum_{k=1}^{K(m)} d_n^{(k,m)} c_q^{(k,m)}, \text{mit} \qquad q = 1..Q, n = 1..N$$

Wobei K(m) die Nummer der Datenkanäle des m-ten Teilnehmers und N die Anzahl der Datensymbole d pro Datenteil ist. Das überlagerte Teilnehmersignal wird einem Funkblockbildner BG zugeführt, der unter der Berücksichtigung der verbindungsindivuellen Mittambel m den Funkblock zusammenstellt.

Da komplexe CDMA-Codes verwendet werden, die von binären CDMA-Codes durch eine Multiplikation mit $j^{q-1}$ abgeleitet werden, ist das Ausgangssignal eines Chipimpulsfilters CIF, das sich an den Funkblockbildner BG anschließt GMSK moduliert und hat eine in etwa konstante Einhüllende falls die Verbindung nur einen Datenkanal nutzt. Das Chipimpulsfilter CIF führt eine Faltung mit einem GMSK-Hauptimpuls durch.

Anschließend an die digitale Signalverarbeitung wird sendeseitig eine Digital/Analog-Wandlung, eine Übertragung ins Sendefrequenzband und eine Verstärkung des Signals durchgeführt. Daraufhin wird das Sendesignal über die Antenneneinrichtung abgestrahlt und erreicht ggf. über verschiedene Übertragungskanäle die empfangende Funkstation, beispielsweise eine Mobilstation MS.

Pro Verbindung wird dabei eine individuelle Mittambel m bestehend aus L komplexen Chips genutzt. Die notwendigen M unterschiedlichen Mittambeln werden von einem Grundmittambelcode der Länge M * W abgeleitet, wobei M die maximale Anzahl von Teilnehmern (Verbindungen) und W die erwartete maximale Anzahl von Werten der Kanalimpulsantwort h darstellt. Die verbindungsindividuelle Mitambel m wird durch eine Rotation nach rechts des Grundmittambelcodes um W * m Chips und periodischer Dehnung bis $L \geq (M + 1)* W - 1$ Chips abgeleitet. Da der komplexe Grundmittambelcode von einem binären Mittambelcode durch Modulation mit $j^{q-1}$ abgeleitet wird, ist das Sendesignal der Mittambel m ebenfalls GMSK moduliert.

Empfangsseitig (siehe FIG 7) findet nach einer analogen Verarbeitung, d.h. Verstärkung, Filterung, Konvertierung ins Basisband, eine digitale Tiefpaßfilterung der Empfangssignale e in einen digitalen Tiefpaßfilter DLF statt. Ein Teil des Empfangssignals e, der durch einen Vektor em der Länge L = M * W repräsentiert wird und keine Interferenzen des Datenteils enthält, wird einem Kanalschätzer KS übermittelt. Die Kanalschätzung aller M Kanalimpulsantworten h wird gemäß

$$h = \text{IDFT} (\text{DFT} (em)g)$$

durchgeführt, mit

$$g = (\text{DFT} (sm))^{-1}.$$

Die Datenschätzung im Joint Detection Datenschätzer DE wird für alle Verbindungen gemeinsam durchgeführt. Die Spreizcodes werden mit $c^{(k)}$ die Empfangsdaten mit $d^{(k)}$ und die korrespondierenden Kanalimpulsantworten mit $h^{(k)}$ repräsentiert, wobei k = 1 bis K ist.

Der Teil des Empfangssignals der für die Datenschätzung benutzt wird, wird durch den Vektor

$$e = A \cdot d + n$$

beschrieben, wobei A die Systemmatrix mit den a-priori bekannten CDMA-Codes $c^{(k)}$ und den geschätzten Kanalimpulsantworten $h^{(k)}$ ist. Der Vektor d ist eine Kombination der Daten $d^{(k)}$ jedes Datenkanals gemäß folgender Gleichung:

$$d = [d_1^{(1)}, d(2)_1, .. d_1^{(K)} .. d_N^{(1)} .. d_N^{(K)}]$$

Für diese Symbolanordnung hat die Systemmatrix A eine Bandstruktur, die zur Reduzierung der Komplexität des Algorithmus genutzt wird. Der Vektor n enthält den Rauschanteil. Die Datenschätzung wird durch einen Zero Forcing Block Linear Equalizer (ZF-BLE) nach folgender Gleichung durchgeführt:

$$d = (A^{*T}A)^{-1}A^{*T}e.$$

Die Komponenten haben ein kontinuierlichen Wert und sind nicht manipulierte Schätzwerte der Datensymbole d. Um die Berechnung von d zu vereinfachen, kann das Problem in ein lineares Gleichungssystem der Form

$$(A^{*T}A)d = A^{*T}e$$

umgeschrieben werden, wobei nach einer Cholesky-Zerlegung

$$A^{*T}A = H^{*T}H$$

die Bestimmung der Datensymbole d auf das Lösen folgender zwei Systeme linearer Gleichungen

$$H^{*T}z = A^{*T}e \qquad \text{mit} \qquad H \cdot d = z$$

reduziert wird. Die Lösung dieser Gleichungssysteme kann rekursiv durchgeführt werden. H ist eine obere Dreiecksmatrix und $H^{*T}$ ist eine untere Dreiecksmatrix.

Die hier beschriebene Datenschätzung ist für einen einzelnen Datenteil gültig. Weiterhin müssen bei der Datenschätzung die Interferenzen zwischen der Mittambel m und den Datenteilen berücksichtigt werden. Nach der Trennung der Datensymbole der Datenkanäle DK1 und DK2 findet eine Demodulation in einem Demodulator DMO, eine Entwürfelung in einem Deinterleaver DI und eine Kanaldecodierung in Faltungsdecodierer FD statt.

Sendeseitig und empfangsseitig wird die digitale Signalverarbeitung durch eine Steuereinrichtung SE gesteuert. Die Steuereinrichtung SE berücksichtigt insbesondere die Anzahl der Datenkanäle DK1, DK2 pro Verbindung, die Spreizcodes der Datenkanäle DK1, DK2, die aktuelle Funkblockstruktur und die Anforderungen an die Kanalschätzung.

Insbesondere wird durch die Steuereinrichtung SE die Überlagerung der Datensymbole d im Summierglied S beeinflußt. Damit kann die Gewichtung der Datensymbole verschiedener Datenkanäle DK1, DK2 eingestellt werden. Außer einer Gleichgewichtung können auch Datensymbole d einer ersten Kategorie (z.B. Signalisierungsinformationen) höher gewichtet werden. Durch die Steuereinrichtung SE wird ebenfall der Funkblockbildner BG gesteuert und somit die Energie pro Symbol eingestellt. Die Energie pro Symbol ist dabei in den Datenteilen und in der Mittambel m gleich. Unter bestimmten Verkehrsbedingungen kann auch eine höhere Gewichtung der Datenteile eingestellt werden.

Das in den Ausführungsbeispielen vorgestellte Mobilfunknetz mit einer Kombination von FDMA, TDMA und CDMA ist für Anforderungen an Systeme der 3. Generation geeignet. Insbesondere eignet es sich für eine Implementierung in bestehende GSM-Mobilfunknetze, für die ein nur geringer Änderungsaufwand nötig ist. Der Entwurf von Dual-Mode Mobilstationen MS, die sowohl nach dem GSM-Standard, als auch nach dem vorgestellten TD/CDMA Standard funktionieren, wird erleichtert.

Durch die Erhöhung der Datenraten pro Zeitschlitz, indem gemeinsame Mittambeln genutzt werden (channel pooling), ist es möglich, schrittweise variable Datenraten von beispielsweise K mal 13 kbit/s einzustellen.

**Patentansprüche**

1. Verfahren zur Datenübertragung über eine Funkschnittstelle in einem Funk-Kommunikationssystem, bei dem

   - die Funkschnittstelle in Zeitschlitze (ts) zur Übertragung von Funkblöcken untergliedert ist,
   - in einem Zeitschlitz (ts) Datenkanäle (DK1, DK2, DK3) durch einen individuellen Spreizkode unterscheidbar sind,
   - in einem Zeitschlitz ein endlicher Funkblock bestehend aus Datensymbolen (d) und zumindest einer Mittambel (m) mit bekannten Symbolen übertragen wird, und
   - in dem Zeitschlitz (ts) eine Mittambel (m) als gemeinsame Mittambel (m) zur Kanalschätzung für mehrere Datenkanäle (DK1, DK2, DK3) einer Verbindung übertragen wird, und
   - das Verhältnis der Länge von Mittambel (m) und einem Datenteil mit Datensymbolen (d) abhängig von der Anzahl Verbindungen in dem Zeitschlitz (ts) und/oder einer bestimmten Übertragungsqualität (Q) eingestellt wird.

**2.** Verfahren nach einem der vorherigen Ansprüche, bei dem die Einstellung des Verhältnises der Länge von Mittambel (m) und dem Datenteil mit Datensymbolen (d) zeitabhängig durchgeführt wird.

**3.** Verfahren nach einem der vorherigen Ansprüche, bei dem die Einstellung des Verhältnisses der Länge von Mittambel (m) und dem Datenteil mit Datensymbolen (d) zeitschlitzindividuell durchgeführt wird.

**4.** Verfahren nach einem der vorherigen Ansprüche, bei dem die in einem Zeitschlitz (ts) verwendeten Mittambeln (m) von einem gemeinsamen Mittambelgrundcode (mg) abgeleitet werden.

**5.** Verfahren nach einem der vorherigen Ansprüche, bei dem die Datenkanäle (DK1, DK2, DK3) mit unterschiedlichen Mittambellängen unterschiedliche Datenraten aufweisen.

**6.** Funkstation (BTS) zur Datenübertragung in einem Funk-Kommunikationssystem über eine Funkschnittstelle,

- wobei die Funkschnittstelle in Zeitschlitze (ts) zur Übertragung von Funkblöcken untergliedert ist,

mit einem Signalverarbeitungsmittel (DSP), das endliche Funkblöcke bestehend aus Datensymbolen (d) und zumindest einer Mittambel (m) mit bekannten Symbolen erzeugt,

- wobei die Funkblöcke in einem Zeitschlitz (ts) übertragen werden und in einem Zeitschlitz (ts) Datenkanäle (DK1, DK2, DK3) durch einen individuellen Spreizkode unterscheidbar sind, und
- wobei die Mittambel (m) als gemeinsame Mittambel (m) zur Kanalschätzung für mehrere Datenkanäle (DK1, DK2, DK3) einer Verbindung in dem Zeitschlitz (ts) gesendet wird, und wobei

ein Steuermittel (SE) ausgestaltet ist

- zum Einstellen des Verhältnisses der Länge von Mittambel (m) und einem Datenteil mit Datensymbolen (d) abhängig von einer Anzahl der Verbindungen in dem Zeitschlitz (ts) und/oder einer bestimmten Übertragungsqualität (Q).

**Claims**

**1.** Method for data transmission via a radio interface in a radio communications system, in which

- the radio interface is subdivided into time slots (ts) for transmission of bursts,
- in one time slot (ts), data channels (DK1, DK2, DK3) can be distinguished by means of an individual spread code,
- a finite burst comprising data symbols (d) and at least one midamble (m) with known symbols is transmitted in one time slot, and
- in the time slot (ts), one midamble (m) is transmitted as a common midamble (m) for channel estimation for a plurality of data channels (DK1, DK2, DK3) for a connection, and
- the ratio of the length of the midamble (m) and a data part with data symbols (d) is adjusted depending on connections in the time slot (ts) and/or on a certain transmission quality (Q).

**2.** Method according to Claim 1, in which the ratio of the length of the midamble (m) and the data part with data symbols (d) is adjusted as a function of time.

**3.** Method according to one of the preceding claims, in which the ratio of the length of the midamble (m) and the data part with data symbols (d) is adjusted for individual time slots.

**4.** Method according to one of the preceding claims, in which the midambles (m) used in a time slot (ts) are derived from a common midamble basic code (mg).

**5.** Method according to one of the preceding claims, in which the data channels (DK1, DK2, DK3) with different midamble lengths have different data rates.

**6.** Radio station (BTS) for data transmission in a radio communications system via a radio interface,

- with the radio interface being subdivided into time slots (ts) for transmission of bursts,

having a signal processing means (DSP) which produces finite bursts comprising data symbols (d) and at least one midamble (m) with known symbols,

- in which case the bursts are transmitted in a time slot (ts) and, in one time slot (ts), data channels (DK1, DK2, DK3) can be distinguished by means of an individual spread code, and
- the midamble (m) is sent as a common midamble (m) for channel estimation for a plurality of data channels (DK1, DK2, DK3) of a connection in the time slot (ts),
- a control means being designed for adjusting the radio of the length of the midamble (m) and a data part with data symbols (d) depending on the number of the connections in the time slot (ts) and/or on a specific transmission quality (Q).


## Revendications

**1.** Procédé pour la transmission de données via une interface radio dans un système de radiocommunication, dans lequel

- l'interface radio est subdivisée en créneaux temporels (ts) pour la transmission de blocs radio,
- des canaux de données (DK1, DK2, DK3) peuvent être différenciés dans un créneau temporel (ts) par un code d'étalement individuel,
- un bloc radio fini composé de symboles de données (d) et d'au moins un midamble (m) avec des symboles connus est transmis dans un créneau temporel et
- un midamble (m) est transmis dans un créneau temporel (ts) en tant que midamble (m) commun pour l'estimation de canal pour plusieurs canaux de données (DK1, DK2, DK3) d'une liaison et
- le rapport entre la longueur du midamble (m) et celle d'une section de données avec des symboles de données (d) est réglé en dépendance du nombre de liaisons dans le créneau temporel (ts) et / ou d'une certaine qualité de transmission (Q).

**2.** Procédé selon l'une des revendications précédentes, dans lequel le réglage du rapport entre la longueur du midamble (m) et celle d'une section de données avec des symboles de données (d) est effectué en dépendance du temps.

**3.** Procédé selon l'une des revendications précédentes, dans lequel le réglage du rapport entre la longueur du midamble (m) et celle d'une section de données avec des symboles de données (d) est effectué individuellement pour chaque créneau temporel.

**4.** Procédé selon l'une des revendications précédentes, dans lequel les midambles (m) utilisés dans un créneau temporel (ts) sont dérivés d'un code de base des midambles (mg) commun.

**5.** Procédé selon l'une des revendications précédentes, dans lequel les canaux de données (DK1, DK2, DK3) ayant des longueurs de midamble différentes présentent des taux de données différents.

**6.** Station radio (BTS) pour la transmission de données via une interface radio dans un système de radiocommunication,

- l'interface radio étant subdivisée en créneaux temporels (ts) pour la transmission de blocs radio,

avec un moyen de traitement de signaux (DSP), lequel génère des blocs radio finis composés de symboles de données (d) et d'au moins un midamble (m) avec des symboles connus,

- les blocs radio étant transmis dans un créneau temporel (ts) et des canaux de données (DK1, DK2, DK3) pouvant être différenciés, dans un créneau temporel (ts), par un code d'étalement individuel et
- le midamble (m) étant transmis dans un créneau temporel (ts) en tant que midamble (m) commun pour l'estimation de canal pour plusieurs canaux de données (DK1, DK2, DK3) d'une liaison et

un moyen de réglage (SE) étant réalisé

- pour le réglage du rapport entre la longueur du midamble (m) et celle d'une section de données avec des symboles de données (d) en dépendance d'un nombre de liaisons dans le créneau temporel (ts) et / ou d'une certaine qualité de transmission (Q).

Fig.1

# Fig.2

ts  ts1  ts2  ts3  ts4  ts5  ts6  ts7  ts8  t (TDMA)

# Fig.3

# Fig.4

W=5 | 1 | 2 | 3 | 4 | 5 | h

| 1 | 2 | 3 | d | N | m | 1 | 2 | 3 | d | N | guard |

W=3 | 1 | 2 | 3 | h

| 1 | 2 | 3 | d | N | m | 1 | 2 | 3 | d | N | guard |

W=7 | 1 | 2 | 3 | 4 | 5 | 6 | 7 | h

| 1 | 2 | 3 | d | N | m | 1 | 2 | 3 | d | N | guard |

# Fig.5

| V1 V2 V3 | V4 V5 V6 V7 | V8 V9 V10 | .. | .. | .. | .. | .. |

ts  ts1  ts2  ts3  ts4  ts5  ts6  ts7  ts8  t (TDMA)

**Fig.6**

**Fig.7**